(19) Europäisches Patentamt
European Patent Office
Office européen des brevets

(11) **EP 2 645 121 A1**

(12) **EUROPÄISCHE PATENTANMELDUNG**

(43) Veröffentlichungstag:
**02.10.2013 Patentblatt 2013/40**

(51) Int Cl.:
**G01S 7/497** (2006.01)

(21) Anmeldenummer: **13161217.8**

(22) Anmeldetag: **27.03.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **27.03.2012 DE 102012102651**

(71) Anmelder: **JENOPTIK Robot GmbH**
**40789 Monheim am Rhein (DE)**

(72) Erfinder:
• **Lehning, Michael, Dr.**
**31137 Hildesheim (DE)**
• **Gebauer, Christoph, Dr.**
**50937 Köln (DE)**
• **Trummer, Michael, Dr.**
**07745 Jena (DE)**

(74) Vertreter: **Schaller, Renate et al**
**Patentanwälte Oehmke & Kollegen**
**Neugasse 13**
**07743 Jena (DE)**

(54) **Prüfvorrichtung und Prüfverfahren für ein Verkehrsüberwachungsgerät mit einem Laserscanner**

(57) Die Erfindung betrifft eine Prüfvorrichtung und ein Prüfverfahren für ein Verkehrsüberwachungsgerät (4) mit einem Laserscanner (41). Die Prüfvorrichtung weist eine Justierplatte (2) mit einem Aufnahmeplatz (3) zur definierten Aufnahme eines zu prüfenden Verkehrsüberwachungsgerätes (4) und eine Messtafel (8) auf. Auf der Messtafel (8), die eine mattschwarze Oberfläche hat, ist ein Linienmuster entlang einer gedachten Geraden (G), die in der Höhe der Soll-Scanebene liegt, vorgesehen. Auf der Geraden (G) sind Vertikallinien (92.1) und eine Diagonallinie (92.2) angeordnet, wobei die Diagonallinie (92.2) mit der Geraden (G) einen Winkel ($\alpha$) einschließt, der so gewählt ist, dass von dem Laserscanner (41) ausgesendete Laserpulse wenigstens drei Laserspots mit einer Soll-Laserspotbreite ($S_B$) und einer Soll-Laserspotlänge ($S_L$) auf die Diagonallinie (92.2) bilden. Das Prüfverfahren nutzt insbesondere die von der Diagonallinie (92.2) reflektierten Laserpulse, um aus den Amplituden (A) der daraus abgeleiteten Empfangssignale eine Güte-Kurve der Amplitude (A) über den Scannwinkel ($\Phi$) zu bilden und diese zu bewerten.

Fig. 2

EP 2 645 121 A1

**Beschreibung**

Die Erfindung betrifft eine Vorrichtung und ein Verfahren zur Prüfung und Kalibrierung eines Verkehrsüberwachungsgerätes (VÜG) mit einem Laserscanner.

Das VÜG kann zusätzlich auch eine Kamera aufweisen, wobei die Kamera dann bereits werksseitig justiert, fest mit dem Laserscanner verbunden ist und damit zu einem Laserscanner-Koordinatensystem ausgerichtet ist.

Mit der Prüfvorrichtung sollen verschiedene Eigenschaften und Parameter (nachfolgend Prüfkriterien) des VÜGs geprüft und abgespeichert werden, um sie als Nachweis für den Kalibrierzustand zu nutzen, bei der Bewertung der Messergebnisse zu nutzen oder aber eine Kalibrierung durchzuführen.

Bei den Prüfkriterien handelt es sich um intrinsische Parameter des Laserscanners oder /und gegebenenfalls um solche der Kamera und der Ausrichtung der Kamera zum Laserscanner.

Ein üblicher Laserscanner, von dessen Prüfung hier beispielhaft ausgegangen werden soll, weist als Laserquelle eine Laserdiode und als Scaneinrichtung einen Polygonspiegel auf. Das Verfahren und die Vorrichtung sind jedoch nicht auf die Prüfung eines solchen Laserscanners beschränkt. Ebenso sind sie nicht beschränkt auf einen Laserscanner, welcher einen Laserstrahl aussendet, der eine größere Strahldivergenz senkrecht zur Scanrichtung aufweist als in Scanrichtung.

Die Einhaltung der Prüfkriterien muss in regelmäßigen Abständen geprüft werden, wozu eine erfindungsgemäße Prüfvorrichtung und ein erfindungsgemäßes Prüfverfahren vorteilhaft verwendet werden können.

Für ein VÜG, umfassend einen Laserscanner zur Erfüllung einer Messaufgabe und gegebenenfalls einer Kamera zur Dokumentation eines Messresultates sind folgende Prüfkriterien zu Prüfen bzw. zu Kalibrieren:

1. Prüfung der Scanebene des Laserscanners in vertikaler Winkellage und Höhe bezüglich des Laserscanner-Koordinatensystems
2. Prüfung und Kalibrierung der Nulllage der Scanebene des Laserscanners senkrecht zur Scanebene
3. Prüfung der Winkeltreue des Scans
4. Prüfung von Strahleigenschaften des Laserstrahls
5. Prüfung der Exaktheit der Entfernungsmessung
6. Prüfung der Sendeleistung der Laserdiode
7. Prüfung der Zeitgenauigkeit und des Gleichlaufs des Polygonspiegels
8. Prüfung unterschiedlicher Reflexionseigenschaften
9. Prüfung der Ausrichtung der Kamera zum Laserscanner und damit zum Laserscanner-Koordinatensystem

Aus der EP 1 355 128 B1 sind ein Verfahren und eine Vorrichtung zum Prüfen der Ausrichtung eines an einem Objekt, insbesondere an einem Fahrzeug, befestigten Laserscanners bekannt.

Die Sollausrichtung des Laserscanners zum Fahrzeug ist so gewählt, dass die Scanebene (dort Abtastebene) horizontal und die Nulllage der Scanebene (dort 0°-Schuss) in Fahrtrichtung und damit parallel zur Fahrzeuglängsachse verläuft.

Die Vorrichtung umfasst wenigstens eine Begrenzungswand, die in einem die Funktion des bestimmungsgemäß am Fahrzeug montierten Laserscanners nicht einschränkenden Bereich seines Scanwinkelbereiches ebenfalls fest an dem Fahrzeug angeordnet ist. Davon ausgehend, dass für die uneingeschränkte Funktion eines solchen Laserscanners maximal ein Scanbereich von 275° von Interesse ist, bleibt, bei einem 360°-Scanner ein Winkelbereich von 90° übrig, in dem wenigstens eine zur Vorrichtung gehörende Begrenzungswand oder bevorzugt zwei Begrenzungswände, einen rechten Winkel miteinander einschließend, angeordnet sein können. Die wenigstens eine Begrenzungswand ist bereichsweise als eine Prüffläche ausgebildet, die in unterschiedlichster Weise ausgeführt sein kann. Die Begrenzungswand und damit die Prüffläche sind zu einem fahrzeugeigenen Koordinatensystem ausgerichtet.

Die Prüffläche kann z. B. eine kameraeigene CCD-Matrix sein, mit der die Lage eines Abtastfleckes bzw. Laserspots, der entsteht, wenn der scannende Laserstrahl auf die Prüffläche auftrifft, ermittelt werden kann. Dabei ist die Kamera und folglich die kameraeigene CCD-Matrix so an der Begrenzungswand und damit mittelbar am Fahrzeug angebracht, sodass bei korrekter Ausrichtung der Abtastebene der Laserstrahl entlang der Zeilen der CCD-Matrix auftrifft.

Alternativ wird z. B. vorgeschlagen, anstelle einer Kamera als Einrichtung zum Nachweis des Auftreffens des Laserstrahls die dem Laserscanner eigene Empfangseinrichtung zu nutzen und die Prüffläche als ein emittierendes oder reflektierendes Linienmuster vorzusehen. Das Linienmuster umfasst mehrere Prüflinien von denen wenigstens zwei nicht parallel zueinander verlaufen. Sie können z. B. N-, M-, V- oder auch W-förmig angeordnet sein. In keinem Fall der aufgeführten Beispiele für das Prüfmuster schneiden sich die Prüflinien. Der Durchmesser des Laserspots, den der Laserstrahl auf der Prüffläche erzeugt, ist klein im Verhältnis zur Länge der Linien und nur geringfügig größer als die Breite der Linien.

Durch die relative Anordnung der Prüflinien kann die Lage der Abtastebene derart codiert werden, dass nur bei korrekt ausgerichtetem Sensor zu einem erwarteten Zeitpunkt, bzw. einer erwarteten Winkelstellung des Scanners, an den Prüflinien reflektierte Laserpulse detektiert werden, während bei einer Fehlausrichtung zu falschen Zeitpunkten bzw. falschen Winkelstellungen reflektierte Laserpulse detektiert werden. In den Absätzen [0068] bis [0074] der Beschreibung ist anhand von Fig. 6 erläutert wie aus der Folge der Winkelstellungen, zu denen Strahlung detektiert wird, auf die Art der Abweichung von einer Sollausrichtung geschlossen werden kann.

Es ergeben sich bei einer korrekt ausgerichteten Abtastebene feste erwartete Scanwinkeldifferenzen (dort Winkelabstände), welche der Laserstrahl zwischen dem Empfang des jeweils an einem der Prüflinien gegebenenfalls reflektierten Laserstrahls, der z. B. von der Sendeeinrichtung des Laserscanners ausgesendet wird, überstreicht.

Für Verkehrsüberwachungsgeräte mit Laserscanner die aufgrund ihrer Anwendung Laserpulse mit einem Strahlquerschnitt aussenden, welcher eine vertikale Divergenz aufweist, die um ein Vielfaches höher ist als die horizontale Divergenz, ist eine Vorrichtung bzw. ein Verfahren, welches von der Lehre der benannten Patentanmeldung EP 1 355 128 B1 Gebrauch macht nicht genau genug. Ein auf der Prüffläche entstehender Laserspot hat dann eine vertikale Ausdehnung (Länge), senkrecht zur Scanrichtung, die um ein Vielfaches größer ist als dessen horizontale Ausdehnung (Breite), womit keine eindeutige Zuordnung der Empfangssignale zu jeweils nur einer Winkelstellung möglich ist, wenn diese nicht durch Reflexion an einer senkrecht ausgerichteten Linie verursacht ist.

Darüber hinaus ist eine solche Vorrichtung nicht geeignet bei einem Verkehrsüberwachungsgerät mit einem Laserscanner und einer Kamera auch Eigenschaften der Kamera oder die Ausrichtung von Kamera und Laserscanner zueinander zu prüfen. Des Weiteren ist diese Vorrichtung nicht geeignet, um die Messergebnisse mit anderen Mitteln zu überprüfen (redundantes Prüfen).

Es ist die Aufgabe der Erfindung ein Prüfverfahren und eine dazu geeignete Prüfvorrichtung zu schaffen, womit ein Verkehrsüberwachungsgerät mit einem Laserscanner, welcher einen Laserstrahl mit einer größeren Divergenz senkrecht zur Scanrichtung als in Scanrichtung aussendet, auf die Lage der Scanebene hin hochgenau geprüft werden kann.

Vorteilhaft sollen das Prüfverfahren und die Prüfvorrichtung geeignet sein, die Lage der Scanebene redundant mit verschiedenen Mitteln zu prüfen. Darüber hinaus sollen das Prüfverfahren und die Prüfvorrichtung geeignet sein, die Ausrichtung einer Kamera zu dem Laserscanner, die zusätzlich zu einem Verkehrsüberwachungsgerät gehört, zu überprüfen sowie weitere Prüfkriterien des Laserscanners und der Kamera zu prüfen. Vorteilhaft soll die Prüfvorrichtung kompakt, transportabel und gegen unbefugte Eingriffe geschützt sein.

Die Aufgabe wird mit einer Prüfvorrichtung gelöst, aufweisend eine Justierplatte, die einen Aufnahmeplatz zur definierten Aufnahme eines zu prüfenden Gerätes, welches einen Laserscanner aufweist, vorsieht und eine zur Justierplatte in einem festen Abstand angeordnete Messtafel. Die Messtafel weist ein Linienmuster entlang einer gedachten Geraden auf, mit mehreren zu der Geraden senkrecht verlaufenden Vertikallinien und einer Diagonallinie. Die Justierplatte und die Messtafel sind zueinander so ausrichtbar, dass die Gerade in einer Soll-Scanebene des Laserscanners liegt. Die Diagonallinie schneidet die Gerade auf einer senkrechten Mittellinie der Messtafel, wobei sie mit der Geraden einen Winkel einschließt. Der Winkel ist so gewählt, dass von dem Laserscanner ausgesendete Laserpulse wenigstens drei Laserspots mit einer Soll-Laserspotbreite und einer Soll-Laserspotlänge, auf die Diagonallinie bilden.

Vorteilhaft gilt für den Winkel: $\alpha = \arc \sin (S_L/2) / (D_L/2)$, wobei $S_L$ die Soll-Laserspotlänge und $D_L$ die Länge der Diagonallinie ist. Vorteilhaft ist $D_L$ dabei möglichst lang. Bei dieser Bedingung erreichen der Anstieg und der Abfall einer Güte-Kurve, welche aus den Empfangsignalen der von der Diagonallinie reflektierten Laserpulse gebildet wird, die größte Breite und damit höchste Empfindlichkeit für Abweichungen der Lage der Laserspots.

Es ist des Weiteren von Vorteil, wenn die Vertikallinien schmale Vertikallinien mit einer Linienbreite gleich der Soll-Laserspotbreite und/oder breite Vertikallinien mit einer Linienbreite gleich dem Vielfachen der Soll-Laserspotbreite sind und die Linienlänge der Vertikallinien gleich der Soll-Laserspotlänge ist, womit eine Abweichung der Scanebene von der Soll-Scanebene sowie eine Abweichung einer Nulllage der Scanebene von einer Soll-Nulllage bestimmt werden kann.

Zwischen der Justierplatte und der Messplatte ist vorteilhaft eine Dämpfungsscheibe vorgesehen und die Messtafel weist eine mattschwarze Oberfläche mit einer bestimmten Reflektivität auf. Die ist so hoch, dass in Zusammenwirkung mit der Dämpfungsscheibe, eine noch ausreichende Reflexion der Laserpulse eines vom Laserscanner kommenden Laserstrahles in den Laserscanner zurück gewährleistet ist, so dass aus dem generierten Empfangssignal gerade noch ein Distanzwert gebildet werden kann.

Die Messtafel weist vorteilhaft eine rechteckige Form auf, wobei jeweils mittig an den vier Kanten eine Messmarke vorgesehen ist. Zu der Prüfvorrichtung gehört des Weiteren ein Prüflaser, welcher zur Justierplatte ausgerichtet an dieser montiert ist. Der Prüflaser ist geeignet, einen Prüflaserstrahl mit einem kreuzförmigen Strahlquerschnitt auszusenden, womit die Messtafel und die Justierplatte zueinander ausgerichtet werden können.

Die Messtafel weist vorteilhaft untere Projektionsflächen in Höhe des Linienmusters auf, wobei zu der Prüfvorrichtung des Weiteren eine Prüfkamera gehört. Dabei ist die Prüfkamera zur Justierplatte ausgerichtet an dieser so montiert, dass die unteren Projektionsflächen in der Objektebene der Prüfkamera liegen, womit darin abgebildete Laserspots scharf von der Prüfkamera abgebildet werden.

Die Messtafel weist vorteilhaft zwei obere Projektionsflächen oberhalb des Linienmusters auf, wobei zu der Prüfvorrichtung des Weiteren zwei Umlenkspiegel und eine Prüfkamera gehören. Die Prüfkamera ist zur Justierplatte ausgerichtet an dieser so montiert, dass die oberen Projektionsflächen in der Objektebene der Prüfkamera liegen. Die beiden Umlenkspiegel sind so angeordnet, dass auftreffende Laserpulse auf jeweils eine der oberen Projektionsflächen auftreffen.

Um mehrere Messstrecken zu realisieren weist die Messtafel wenigstens eine Spiegelfläche auf und zu der Prüfvorrichtung gehört wenigstens ein Einzelspiegel. Die wenigstens eine Spiegelfläche und der wenigstens eine Einzelspiegel sind so zueinander und zur Justierplatte angeordnet, dass ein Laserpuls mehrfach gefaltet auf der Messtafel auftrifft, womit wenigstens eine Messstrecke realisiert wird, die einem Vielfachen des Abstandes von Justierplatte und Messtafel entspricht.

Zur Ausrichtung einer zu dem Gerät gegebenenfalls gehörigen Kamera weist die Messtafel vorteilhaft einen umlaufenden weißen Rahmen auf, der über die Prüfkamera abgebildet wird.

Die Aufgabe wird auch mit einem Prüfverfahren gelöst, bei dem ein scannereigenes Koordinatensystem eines VÜGs mit einem Laserscanner und eine Messtafel mit einem Linienmuster entlang einer gedachten Geraden mit mehreren zu der Geraden senkrecht verlaufenden Vertikallinien und einer Diagonallinie, welche die Gerade auf einer senkrechten Mittellinie der Messtafel schneidet, wobei sie mit der Geraden einen Winkel einschließt, der so gewählt ist, dass von dem Laserscanner ausgesendete Laserpulse wenigstens drei Laserspots mit einer Soll-Laserspotbreite und einer Soll-Laserspotlänge, auf die Diagonallinie auftreffen, so zueinander ausgerichtet werden, dass die Gerade in einer Soll-Scanebene des Laserscanners liegt.

Der Laserscanner sendet über einen Scanwinkelbereich einen Laserstrahl mit einer Vielzahl von Laserpulsen aus, die auf die Messtafel treffen und dort jeweils einen der Laserspots bilden. Bei Auftreffen auf die senkrecht verlaufenden Vertikallinien und die Diagonallinie werden die Laserpulse in einen Empfänger des Laserscanners reflektiert wo Empfangssignale mit einer Güte, bzw. einer Amplitude generiert werden.

Aus den Werten der Güte, das heißt der Amplitude der Empfangssignale wird eine Ist-Güte-Kurve über den Scanwinkel ($\Phi$) gebildet und mit einer bekannten Soll-Güte-Kurve verglichen. Es kann damit unter anderem auf die Lage der Ist-Scanebene im Vergleich zur Soll-Scanebene geschlossen werden.

Die Erfindung wird nachfolgend anhand von Ausführungsbeispielen und einer Zeichnung näher erläutert. Hierzu zeigen:

Fig. 1 eine Ansicht einer Prüfvorrichtung gemäß einem ersten Ausführungsbeispiel
Fig. 2 eine Messtafel gemäß dem ersten Ausführungsbeispiel
Fig. 3a - 3c die Messtafel gemäß Fig. 2 mit darauf abgebildeten Laserspots einer Laserpulsfolge sowie zugehörige Güte-Kurven des Empfangssignals
Fig. 4a - 4b Messtafeln gemäß weiterer Ausführungsbeispiele

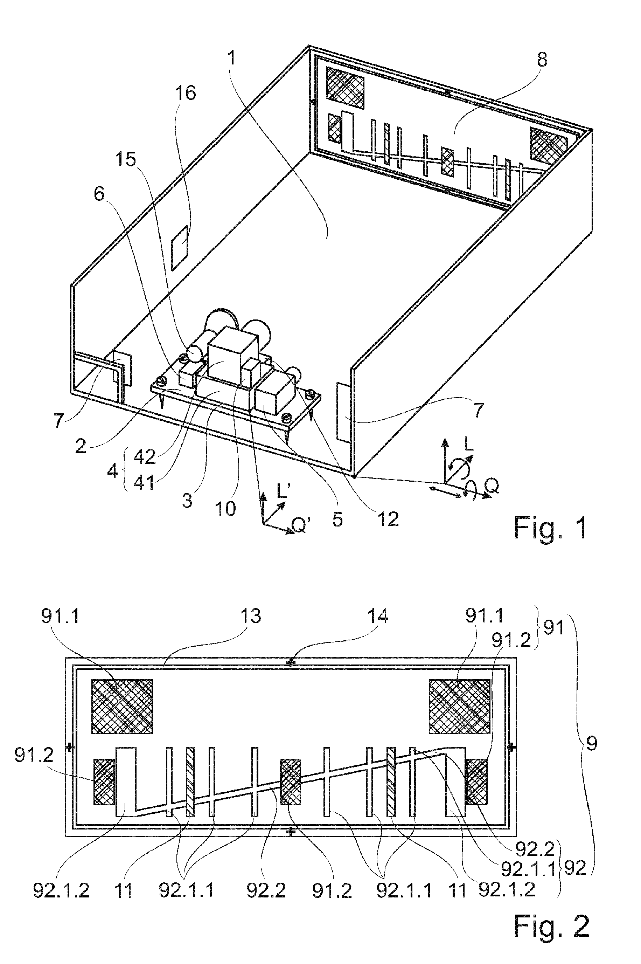

Ein erstes vorteilhaftes Ausführungsbeispiel für eine Prüfvorrichtung ist in Fig. 1 gezeigt.

Die Prüfvorrichtung besteht im wesentlichen aus einer Grundplatte 1, welche der steife Boden eines Gehäuses für die Prüfvorrichtung sein kann, einer Justierplatte 2 mit einem Aufnahmeplatz 3, für ein zu prüfendes Verkehrsüberwachungsgerät (VÜG) 4, welches einen Laserscanner 41 und eine Kamera 42 aufweist, einer Prüfkamera 5, einem Prüflaser 6, einigen Einzelspiegeln 7, einer Dämpfungsscheibe 12, einer Messtafel 8 und einem Speicher 10.

Die Justierplatte 2 ist innerhalb von Toleranzgrenzen gegenüber der Grundplatte 1 bzw. einem grundplatteneigenen kartesischen Koordinatensystem um dessen Längsachse L und dessen Querachse Q manuell verkippbar.

Die Messtafel 8 ist austauschbar auf der Grundplatte 1 montiert und gegenüber dieser bzw. dem grundplattenfesten Koordinatensystem in Richtung der Querachse Q manuell verschiebbar. Diese drei Freiheitsgrade sind ausreichend, um die Messtafel 8 und die Justierplatte 2 zueinander auszurichten.

Auf der Justierplatte 2 ist durch Führungsstifte, Anschläge o. Ä. ein Aufnahmeplatz 3 festgelegt, auf dem ein zu prüfendes VÜG 4 definiert zur Justierplatte 2 aufgesetzt werden kann. Mit dem definierten Aufsetzen des VÜG 4 wird ein scannereigenes Koordinatensystem des Laserscanners 41 zu der Justierplatte 2 ausgerichtet. Nach einer Ausrichtung der Messtafel 8 und der Justierplatte 2 zueinander, ist die Messtafel 8 zum scannereigenen Koordinatensystem ausgerichtet. Dies ist die Voraussetzung, um mit der Prüfvorrichtung, mit Hilfe der Messtafel 8, Prüfkriterien des Laserscanners 41 und der mit ihm verbundenen Kamera 42 prüfen zu können.

Die Justierplatte 2 ist möglichst nahe an einem Ende der Grundplatte 1 und die Messtafel 8 ist möglichst nahe an einem anderen Ende der Grundplatte 1 angeordnet, sodass dazwischen in Richtung der Längsachse L ein möglichst großer Abstand entsteht. Dieser Abstand bestimmt grundsätzlich die optische Entfernung zwischen dem VÜG 4 und auf der Messtafel 8 vorgesehenen Komponenten, wie Messflächen 9. Die optische Entfernung wird für bestimmte Messzwecke durch die Einzelspiegel 7 und auf der Messtafel 8 vorgesehene Spiegelflächen 11 vervielfacht, womit durch Faltung des Laserstrahls mehrere Messstrecken definierter Länge realisiert werden können.

Die Prüfkamera 5 ist auf der Justierplatte 2 angeordnet und in Bezug zum Aufnahmeplatz 3 ausgerichtet. Mit ihr können z. B. der Abstand und die Winkelausrichtung der Messtafel 8 zum Aufnahmeplatz 3 überprüft werden. Ihr Kameraobjektiv bildet vorteilhaft die gesamte Messtafel 8 ab.

Für eine redundante Kontrolle der Ausrichtung der Messtafel 8 mit anderen Mitteln ist der Prüflaser 6 vorhanden, der einen Prüflaserstrahl mit einem kreuzförmigen Strahlenquerschnitt aussendet. Der Prüflaser 6 ist zum Aufnahmeplatz 3 ausgerichtet. Bei korrekter Ausrichtung der Messtafel 8 zum Aufnahmeplatz 3 treffen die beiden Schenkel des kreuzförmigen Prüflaserstrahles diagonal auf die Messtafel 8 auf und schneiden die vier Messmarken 14 die jeweils mittig an den Messtafelrändern vorgesehen sind.

Die Messtafel 8 besteht aus einer schwarzen Platte, die verschiedene, im Folgenden beschriebene Komponenten aufweist, welche die Bestimmung der unter den Punkten 1 bis 9 genannten Prüfkriterien für den Laserscanner 41 und die Kamera 42 sowie deren Ausrichtung zueinander erlaubt. Einige Komponenten sind zwingend auf der Messtafel 8 vorhanden, während andere nur vorteilhaft vorgesehen sind. Zu den Komponenten der in Fig. 2 gezeigten Messtafel 8 gehören mehrere auch verschiedene Messflächen 9, zwei Spiegelflächen 11, vier Messmarken 14 und ein Rahmen 13.

Die matt-schwarze Oberfläche der Messtafel 8 gewährleistet in Zusammenwirkung mit der Dämpfungsscheibe 12, die direkt vor dem auf dem Aufnahmeplatz 3 angeordneten Laserscanner 41 positioniert ist, eine minimale Reflexion der Laserpulse eines vom Laserscanner 41 kommenden Laserstrahles in den Laserscanner 41 zurück, so dass aus dem generierten Empfangssignal gerade noch ein Distanzwert gebildet werden kann.

Die Messflächen 9 sind in Abhängigkeit von ihrer Funktion mit unterschiedlichen Materialien bzw. Lacken in unterschiedlicher Form, Größe und Lage auf der Messtafel 8 aufgebracht. Zu den Messflächen 9 der in Fig. 2 gezeigten Messtafel 8 gehören Projektionsflächen 91, die sich in obere Projektionsflächen 91.1 und untere Projektionsflächen 91.2 unterscheiden sowie Reflexionsflächen 92, wobei die unteren Projektionsflächen 91.2 in der Höhe der Scanebene angeordnet sind.

Die unteren Projektionsflächen 91.2 sind mattweiß und in einer Größe größer dem Querschnitt eines auftreffenden Laserspots, um diesen optimal abzubilden, damit von diesem mit der Prüfkamera 5 ein gut auswertbares Bild aufgenommen werden kann.

Die oberen Projektionsflächen 91.1 dienen der Abbildung von Laserspots, erzeugt von den den Scanwinkelbereich begrenzenden Laserpulsen, das heißt den ersten und letzten Laserpulsen der Laserpulsfolge eines Scans. Die Breite der Prüfvorrichtung, in Richtung der Querachse Q, begrenzt in Abhängigkeit von der Länge der Prüfvorrichtung, in Richtung der Längsachse L, den Winkelbereich indem die ausgesandten Laserpulse auf die Messtafel 8 auftreffen. Wenn dieser Winkelbereich, z. B. 20°, nur ein Teil eines Scanwinkelbereiches von z. B. 70° ist, dann werden auf direktem Wege nur die mittleren Laserpulse auf die Messtafel 8 gerichtet. Für die Prüfung vieler Prüfparameter, so auch der Lage der Scanebene, ist dies ausreichend. Um allerdings auch die Randlaserpulse prüfen zu können, werden diese indirekt über Umlenkspiegel 16 auf die Messtafel 8 und hier auf die oberen Projektionsflächen 91.1 gelenkt und können dort in gleicher Weise bewertet werden, wie die mittleren Laserpulse über die unteren Projektionsflächen 91.2, was an späterer Stelle erläutert wird. Auf diese Weise kann die Prüfvorrichtung unabhängig vom Scanwinkelbereich des Laserscanners 41 auf eine kompakte Breite begrenzt werden, ohne dass auf eine Bewertungsmöglichkeit der Randlaserpulse verzichtet werden muss.

Die Reflexionsflächen 92 bestehen aus einem retroreflektierenden Material, das möglichst die gesamte einfallende Energie des vom Laserscanner 41 kommenden Laserstrahls zum Laserscanner 41 zurückwirft und bilden gemeinsam ein Linienmuster entlang einer gedachten Geraden G.

Zu den Reflexionsflächen 92 gehören mehrere Vertikallinien 92.1, die senkrecht auf der Geraden G stehen und eine Diagonallinie 92.2, welche die Gerade G in einem Winkel $\alpha$ schneidet. Die Vertikallinien 92.1 und die Diagonallinie 92.2 dienen zur Überprüfung der korrekten Höhe und einer waagerechten Ausrichtung der Scanebene bezüglich eines scannereigenen Koordinatensystems.

Grundsätzlich könnten auch mehrere Diagonallinien 92.2 vorhanden sein oder die eine Diagonallinie 92.2 die Gerade G nicht auf der Mittellinie M der Messtafel 8 schneiden, dies würde aber in Verbindung mit dem Prüfverfahren zu einer schlechteren Ausführung der Messtafel 8 führen. Es ist wesentlich, dass die Diagonallinie 92.2 in Abhängigkeit von den Winkelabständen zwischen zwei benachbarten Laserpulsen und der Soll-Laserpulslänge $S_L$ einen solchen Winkel $\alpha$ mit der Geraden G einschließt, dass wenigstens drei Laserspots auf der Diagonallinie 92.2 abgebildet werden. Sie muss keine Diagonale im mathematischen Sinne im Linienmuster sein.

Zur Durchführung des Prüfverfahrens mit Hilfe der Messtafel 8 ist es für die örtliche Auflösung in Scanrichtung von Vorteil, wenn der Anstieg und der Abfall des Anteiles einer Güte-Kurve, aus den Empfangssignalen der von der Diagonallinie 92.2 reflektierten Laserpulse gebildet wird, verhältnismäßig breit ist. Die größte Breite und damit höchste Empfindlichkeit für Abweichungen der Lage der Laserspots wird erhalten, wenn die Diagonale der Bedingung genügt:

$$\alpha = \text{arc sin } (S_L/2) \, / \, (D_L/2),$$

wobei $S_L$ die Soll-Laserspotlänge, $D_L$ die Länge der Diagonallinie 92.2, $\alpha$ der Winkel ist, den die Diagonallinie 92.2 mit der gedachten Geraden G einschließt, ist und $D_L$ möglichst lang ist.

Es gibt breite Vertikallinien 92.1.2 und schmale Vertikallinien 92.1.1. Die schmalen Vertikallinien 92.1.1 und die eine Diagonallinie 92.2 sind die einzigen zwingenden Komponenten, welche die Messtafel 8 aufweisen muss. Dabei ist es wesentlich, dass die schmalen Linien 92.1.1 in der Breite gleich der Soll-Laserspotbreite $S_B$ eines Laserspots dimensioniert sind, sodass ein Laserspot mit einer Soll-Laserspotbreite $S_B$, der mittig auf eine schmale Vertikallinie 92.1.1 auftrifft, komplett reflektiert wird. Breitere Laserspots werden entsprechend ihrer Breitenabweichung gedämpft.

Die Diagonallinie 92.2 verläuft durch den Mittelpunkt des Linienmusters und wird dort in ihrer Länge halbiert. Sie schneidet vorteilhaft mehrere schmale Vertikallinien 92.1.1.

Zu den Reflexionsflächen 92 gehören auch breite Vertikallinien 92.1.2. Für sie gilt entsprechendes wie für die schmalen Vertikallinien 92.1.1, nur entspricht die Breite der breiten Vertikallinien 92.1.2 einem ganzzahligen Vielfachen der Soll-Laserspotbreite $S_B$. Der Abstand zwischen den Kanten der Vertikallinien 92.1 entspricht ebenfalls einem ganzzahligen Vielfachen der Soll-Laserspotbreite $S_B$. Die Höhe der Vertikallinien ist größer/gleich der Soll-Laserspotlänge $S_L$.

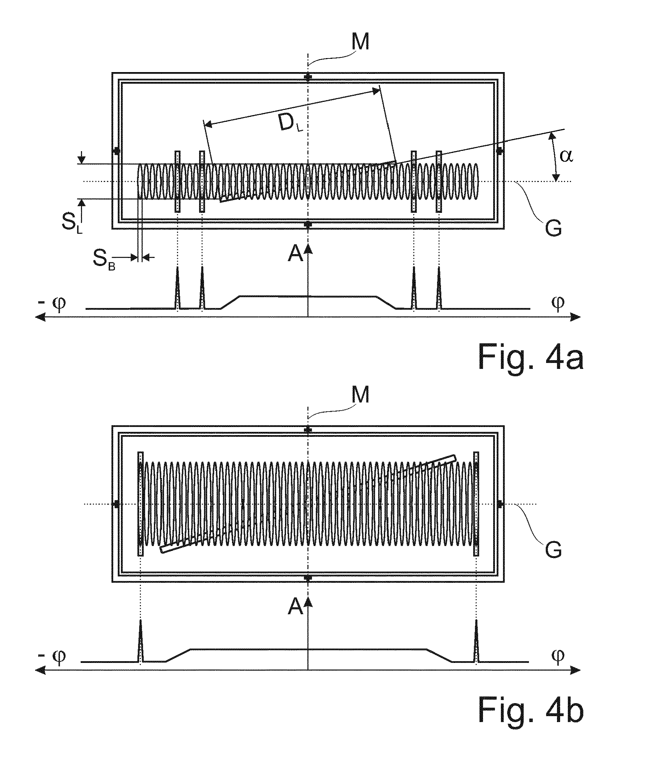

In den Fig. 4a - 4b sind weitere Ausführungsbeispiele für die Messtafel 8 gezeigt sowie die jeweils dazugehörigen Soll-Güte-Kurven.

Die gesamte Prüfvorrichtung ist in einem geschlossenen Gehäuse untergebracht, dessen Bodenplatte die Grundplatte 1 darstellt. Das Gehäuse weist nur zwei notwendige Öffnungen auf, eine um ein VÜG 4 in die Prüfvorrichtung einzusetzen bzw. es herauszunehmen und die Justierplatte 2 manuell verstellen zu können und die andere, um die Messtafel 8 einsetzen, ausrichten und visuell betrachten zu können. Die Klappen können nach Verschluss gesichert werden, um einen unbefugten Zugriff während der Prüfung zu verhindern.

In dem Gehäuse ist mindestens eine Beleuchtungseinrichtung 15 vorgesehen, die für Prüfschritte, in denen mittels der Prüfkamera 5 oder der Kamera 42 des VÜGs 4 Aufnahmen von der Messtafel 8 oder Ausschnitten der Messtafel 8 erstellt werden, zur Beleuchtung dient. Am Gehäuse ist der Speicher 10 vorgesehen. Dies kann z. B. ein von außen zugängiger USB-Stick sein an den ein Computer angeschlossen werden kann.

Das Prüfverfahren umfasst einzelne Verfahrenschritte, die vollautomatisiert sind. Die Steuerung erfolgt über den Computer.

Zu den Verfahrensschritten gehören Prüfschritte in denen jeweils ein Prüfkriterium geprüft wird, um dessen Ist-Zustand zur Dokumentation oder anschließenden Beachtung bei Messungen mit dem VÜG 4 im Speicher 10 abzuspeichern bzw. um, bei Abweichung des Ist-Zustandes vom Soll-Zustand außer Toleranz, das VÜG 4 außerhalb der Prüfvorrichtung einem Service zu unterziehen.

Das Prüfverfahren kann auch Kalibrierschritte umfassen, bei denen nach einer Prüfung eines Prüfkriteriums und Feststellung eines von einem Soll-Zustand abweichenden Ist-Zustand das Prüfkriterium auf den Soll-Zustand kalibriert wird.

Zwingend gehört zum Prüfverfahren der Verfahrensschritt der Prüfung der Ausrichtung der Scanebene des Laserscanners 41.

Eine redundante Prüfung der Ausrichtung der Scanebene mit anderen Mitteln und einem entsprechend anderen Verfahrensschritt sowie das Prüfen bzw. Kalibrieren der anderen Prüfkriterien kann vorteilhaft wahlweise zum Prüfverfahren gehören.

In allen Prüf- und Kalibrierschritten wird die Messtafel 8 benötigt, weshalb deren korrekter Ausrichtung eine besondere Bedeutung zukommt.

Vor der Durchführung des Prüfverfahrens muss, um zu verlässlichen Ergebnissen zu kommen, der korrekte Aufbau der Prüfvorrichtung überprüft und im Falle von Abweichungen eingestellt werden. Dies geschieht mit der Prüfkamera 5.

Mit Hilfe des weißen Rahmens 13 um die Messtafel 8 wird der Abstand zwischen dieser Prüfkamera 5 und der Messtafel 8 sowie die Ausrichtung der Messtafel 8 zur Justierplatte 2 bestimmt. Um ein präzises Ergebnis zu erhalten, ist es notwendig, dass die Prüfkamera 5 kalibriert ist. Hierbei werden Parameter, wie exakte Brennweite oder Verzerrungsparameter des Kameraobjektivs bestimmt und in dem Speicher 10 hinterlegt. Diese Parameter fließen dann in die Bestimmung der geometrischen Größen der Prüfvorrichtung mit ein.

Eine weitere Möglichkeit zu prüfen, ob die Prüfvorrichtung den Anforderungen entspricht, wird durch einen zum Aufnahmeplatz 3 ausgerichteten Prüflaser 6 realisiert. Der Prüflaser 6 sendet einen Prüflaserstrahl mit einem kreuzförmigen Strahlquerschnitt aus. Bei korrekter Ausrichtung der Messtafel 8 zu dem Aufnahmeplatz 3 liegen die Schenkel des Kreuzes auf den vier Messmarken 14 der Messtafel 8. Ist die Messtafel 8 im Raum rotiert oder weicht die Entfernung der Messtafel 8 vom Sollwert ab, so fallen die Schenkel des Kreuzes und die Messmarken 14 nicht übereinander. Auf diese Weise ist eine visuelle Kontrolle des korrekten Aufbaus der Prüfvorrichtung möglich.

Zur Durchführung des Prüfverfahrens werden folgende Verfahrensschritte nacheinander ausgeführt:

  1. Definiertes Einsetzen des VÜGs 4 in die Prüfvorrichtung an den Aufnahmeplatz 3
  2. Anschließen des Computers und Starten der Prüfprogramme
  3. Ausrichtung der Messtafel 8 mit Hilfe des Prüflasers 6 und per Augenprüfung

4. Verschließen des Gehäuses der Prüfvorrichtung

5. Aufnehmen von Bildern mit der Kamera 42 und der Prüfkamera 5

6. Prüfung einzelner Prüfkriterien nacheinander (Prüfschritte)

7. Auswertung der Prüfergebnisse

8.1 Abschluss des Prüfverfahrens, falls alle Werte innerhalb der Akzeptanztoleranzen liegen oder

8.2 Neukalibrierung kalibrierbarer Prüfkriterien, falls die Abweichung der Prüfergebnisse außerhalb der Akzeptanztoleranzen jedoch innerhalb der Prüftoleranzen liegen

8.3 Wiederholung der Prüfung einzelner Prüfkriterien für welche die Messergebnisse außerhalb der Prüftoleranzen liegen und Abbruch bei Bestätigung der Abweichung

9. Erstellung eines Prüfprotokolls

Nachfolgend werden die verschiedenen Prüfschritte näher erläutert.

<u>Prüfung des Prüfkriteriums 1 - vertikale Winkellage und Höhe der Scanebene des Laserscanners 41</u>

Wie bereits erläutert, dienen die Reflexionsflächen 92 zur Überprüfung der korrekten Höhe und einer waagerechten Ausrichtung der Scanebene, das heißt die vertikale Winkellage der Scanebene soll gleich Null sein, bezüglich eines scannereigenen Koordinatensystems. Zur Prüfung dieses Prüfkriteriums wird der Laserstrahl des Laserscanners 41 in Form von Laserpulsen, mit einer bekannten Pulsfrequenz und einer bekannten Scangeschwindigkeit innerhalb eines bekannten Scanwinkelbereiches über die Messtafel 8 gescannt.

Aufgrund der bekannten Pulsfrequenz, der bekannten Scangeschwindigkeit und dem bekannten Scanwinkelbereich ist die Anzahl der Laserpulse, die pro Scan abgegeben werden (Laserpulsfolge eines Scans), bekannt.

Bei gegebener Winkeltreue des Scans und Gleichlauf des den Laserstrahl scannenden Polygonspiegels, kann jeder Laserpuls einer Laserpulsfolge exakt einem Scanwinkel $\varphi$ innerhalb des Scanwinkelbereiches und damit einem Soll-Auftreffpunkt auf der Messtafel 8 zugeordnet werden. Das heißt für einen korrekt kalibrierten Laserscanner sind die Soll-Auftreffpunkte bekannt, denen jeweils ein bestimmter Laserpuls zugeordnet werden kann.

Die im Auftreffpunkt entstehenden Laserspots weisen bei bekannter Divergenz des Laserstrahls und einem bekannten optischen Abstand zwischen dem den Laserstrahl aussendenden Laserscanner 41 und dem Auftreffpunkt eine Soll-Laserspotgröße mit einer Soll-Laserspotbreite $S_B$ in Scanrichtung und einer dazu senkrechten Soll-Laserspotlänge $S_L$ auf, wobei die Scanrichtung auf die Gerade G fällt.

Für die Beschreibung dieses und der später beschriebenen Verfahrensschritte soll von einem Laserstrahl des Laserscanners 42 ausgegangen werden, der eine nur geringe Divergenz in Scanrichtung im Vergleich zur Divergenz senkrecht zur Scanrichtung aufweist. Die geringe Divergenz in Scanrichtung und damit geringe Soll-Laserspotbreite $S_B$ führt zu einer hohen örtlichen Auflösung der Messwerte, während die große Divergenz senkrecht zur Scanrichtung gerade in der Verkehrsmesstechnik sicherstellt, dass bei den Messungen mit dem Laserscanner 41 geeignete reflektierende Flächen angemessen werden, die sich an unterschiedlichen Fahrzeugen in unterschiedlicher Höhe befinden können.

Während eines Scans treffen die Laserpulse einer Laserpulsfolge abwechselnd auf die Messflächen 9 und die schwarze Oberfläche der Messtafel 8 auf und erzeugen im Auftreffpunkt einen Laserspot. In Abhängigkeit von der Pulsfrequenz und der Scangeschwindigkeit müssen bestimmte Laserspots auf den Reflexionsflächen 92 liegen. Die auf die Messtafel 8 auftreffenden Laserpulse werden in den Laserscanner 41 zurückreflektiert und verursachen dort ein Empfangssignal.

Die Güte der Empfangssignale, die sich in einer definierten Amplitude A des Empfangssignals ausdrückt, unterscheidet sich in Abhängigkeit von Reflexionseigenschaften der Messtafel 8 im Auftreffpunkt. Für die Auswertung der einzelnen Laserspots wird die Güte der von den reflektierten und empfangenen Laserpulsen verursachten Empfangssignale herangezogen und daraus eine Ist-Güte-Kurve für die Amplitude A über den Scanwinkel $\varphi$ gebildet.

Dabei ist die Güte des Empfangssignals eines Laserpulses, der vollständig auf die schwarze Oberfläche auftrifft, gerade so groß, dass noch ein Entfernungswert gebildet werden kann, das heißt seine Amplitude A liegt knapp über der Empfindlichkeitsgrenze des die Laserpulse empfangenden Detektors des Laserscanners 41.

Die Güte des vollständig von einer Reflexionsfläche 92 zurückgeworfenen Laserpulses wird als Maximal angenommen. Der Detektor ist so ausgewählt, dass dessen Empfindlichkeitsgrenze knapp oberhalb der maximalen Amplitude A liegt, diese also knapp unter der Sättigungsgrenze des Detektors liegt.

Laserpulse, die auf die Projektionsflächen 91 auftreffen, bilden dort einen Laserspot der zum Zweck der Auswertung im Kamerabild optimal visualisiert wird. Die Reflektivität der Projektionsflächen 91 ist höher als die der schwarzen Oberfläche der Messtafel 8 aber deutlich geringer als die der Reflexionsflächen 92.

Die Güte der Empfangssignale wird geprüft und es kann daraus geschlossen werden, ob zum einen die richtigen Laserspots auf die Reflexionsflächen 92 treffen und zum andern diese erhaltene Güte dem Sollwert entspricht, um so festzustellen, ob die Laserspots jeweils vollständig auf einer der Reflexionsflächen 92 liegen.

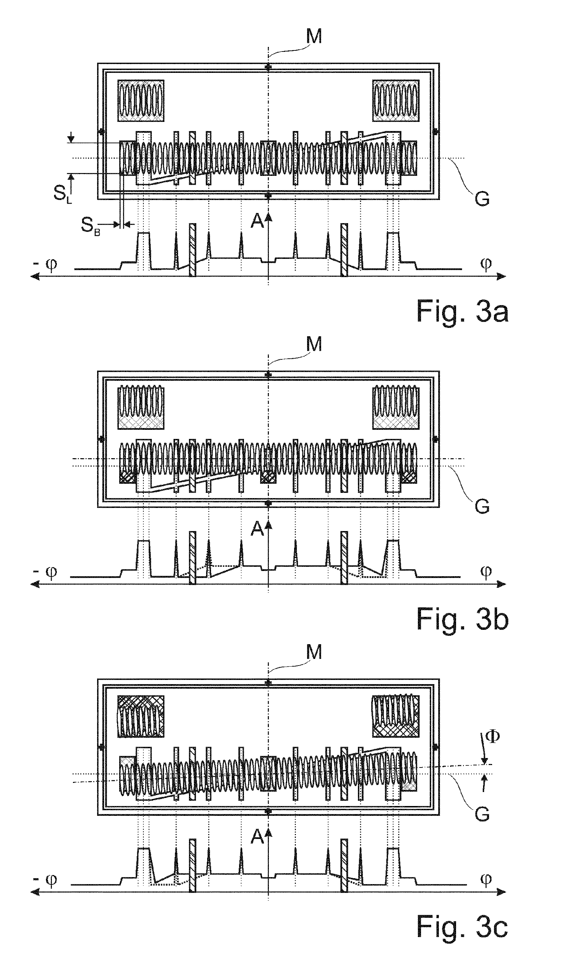

In den Fig. 3a bis 3c ist eine Messtafel 8 dargestellt, auf welcher wenigstens die mittleren Laserspots und die Randlaserspots eines Scans abgebildet sind und eine jeweils dazugehörige Ist-Güte-Kurve.

Bei der Darstellung in Fig. 3a wurde der Scan mit einem Laserscanner 41 in korrekt ausgerichteter Scanebene, in einer Sollhöhe entlang einer gedachten Gerade G erzeugt. Die Ist-Güte-Kurve entspricht demnach einer Soll-Güte-Kurve.

Beim Abscannen des Scanwinkelbereiches, von links beginnend, bedeckt der Laserspot die Diagonallinie 92.2, unter Vernachlässigung der Wirkung der mittleren breiten Vertikallinien 92.1.2, erst zunehmend, dann gleichbleibend und dann wieder abnehmend. Bei einer korrekten Null- und Höhenlage des Laserstrahls ergibt sich für die Empfangssignale der Laserpulse, die nicht auf die Vertikallinien 92.1 auftreffen, eine stetig zunehmende Güte (Anstiegsflanke) bis zu einem Maximalwert bzw. stetig abnehmende Güte (Abstiegsflanke) von diesem Maximalwert, wobei der Maximalwert kleiner ist als die Güte des Empfangssignals eines vollständig auf eine Vertikallinie 92.1 auftreffenden Laserpulses. Der Verlauf der Güte-Kurve ist um deren Mittelinie M vorteilhaft symmetrisch.

Bei der Darstellung in Fig. 3b liegt die Scanebene zu hoch, was seine Ursache in einer Verkippung der Scanebene um die Querachse Q' des scannereigenen Koordinatensystems haben kann. Die gebildete Ist-Güte-Kurve zeigt eine veränderte, nicht mehr zur Mittelinie M symmetrische Lage der zu Fig. 2a erläuterten Anstiegs-und Abstiegsflanke im Vergleich zur Soll-Güte-Kurve. Das Maß der Verschiebung der Flanken ist ein Maß für die Abweichung der Höhe der Scanebene von einer Sollhöhe.

Eine Verschiebung nach rechts weist auf eine Höhe größer der Sollhöhe hin. Eine Verschiebung nach links weist entsprechend auf eine Höhe der Scanebene kleiner der Sollhöhe hin.

Eine Abweichung der Scanebene aus der Horizontalen, wie in Fig. 3c gezeigt, erfolgt durch eine Verkippung um die Längsachse L' des scannereigenen Koordinatensystems und führt zu einer Ist- Güte- Kurve, bei welcher die genannten Flanken gegenüber der Soll- Güte- Kurve gestaucht bzw. gestreckt und damit in ihrem Anstieg verändert sind.

Redundant kann die Lage der Scanebene durch die Lage der Auftreffpunkte von Laserspots auf drei, in einer Höhe vorgesehenen, gleich großen unteren Projektionsflächen 91.2 (s. Fig. 3a-3c) geprüft werden, was im Zusammenhang mit der Beschreibung der Prüfung und Kalibrierung des Prüfkriteriums 2 erläutert wird.

<u>Prüfung und Kalibrierung des Prüfkriteriums 2 - Nulllage der Scanebene senkrecht zur Scanebene</u>

Für die Überprüfung und Kalibrierung der korrekten Nulllage der Scanebene dienen die drei, in einer Höhe vorgesehenen, gleich großen unteren Projektionsflächen 91.2 (s. Fig. 3a-3c). Deren Breite ist größer als die Soll-Laserspotbreite $S_B$, während deren Länge größer als die Soll-Laserspothöhe ist. Sowohl die Länge als auch die Breite werden so gewählt, dass in Kenntnis einer maximalen Abweichung der Lage der Laserspots innerhalb einer zulässigen Toleranzgrenze die Spots noch vollständig auf den unteren Projektionsflächen 91.2 abgebildet werden.

Der Laserscanner 41 wird jetzt so angesteuert, dass er von der Laserpulsfolge eines Scans, welche die bereits beschriebenen Eigenschaften aufweist, nur die Laserpulse aussendet, welche bei einem kalibrierten Laserscanner 41 ihre Auftreffpunkte innerhalb der unteren Projektionsflächen 91.2 haben, so dass nur die unteren Projektionsflächen 91.2 belichtet werden.

Es kann nun zum einen mittels einer der Prüfkameras 5 festgestellt werden, ob die Laserspots der ausgewählten Laserpulse vollständig innerhalb der unteren Projektionsflächen 91.2 liegen. Liegen die Laserspots seitlich gesehen nicht vollständig auf den unteren Projektionsflächen 91.2, dann befindet sich die Nulllage der Scanebene des Laserscanners 41 nicht in der Soll-Nulllage bzw. nicht innerhalb einer zulässigen Toleranzgrenze um die Soll-Nulllage.

Ein Herausragen der Laserspots nach oben oder unten, über die unteren Projektionsflächen 91.2 hinaus, ist ein Maß für die Auswanderung der Scanebene aus der Lage der Soll-Scanebene bzw. aus der Toleranzgrenze um die Soll-Scanebene.

Redundant kann über die erhaltene Ist-Güte-Kurve überprüft werden, ob die Laserspots alle vollständig auf den Projektionsflächen 91 liegen. Ragt ein Laserspot teilweise über den Rand einer der Projektionsflächen 91 hinaus, so liegt die Güte des Empfangssignals unterhalb der erwarteten Soll-Güte. Daraus allerdings auf eine Auswanderung der Nulllage zu schließen, setzt voraus, dass gesichert ist, dass die Scanebene in der richtigen Höhe verläuft, womit die Ursache der Abweichungen der Güte auf eine ausgewanderte Nulllage zurückgeführt werden kann.

Die Prüfung der Nulllage über die Bewertung der Ist-Güte-Kurve kann auch über einen Scan mit einer vollständigen Laserpulsfolge erfolgen.

In Kenntnis einer Abweichung der Ist-Nulllage von einer Soll-Nulllage kann die Nulllage neu kalibriert werden.

<u>Prüfen des Prüfkriteriums 3 - der Winkeltreue des Scans in Maß und Äquidistanz</u>

Dieser Prüfschritt läuft analog dem Prüfschritt für das zweite Prüfkriterium ab. Liegen die Laserspots seitlich gesehen nicht vollständig auf den unteren Projektionsflächen 91.2, dann weicht der Scanwinkel φ der die betreffenden Lasersports verursachenden Laserpulse von deren Soll-Scanwinkel φ ab.

Redundant kann über die erhaltene Ist-Güte-Kurve überprüft werden, ob die Laserspots alle vollständig auf den Projektionsflächen 91 liegen. Ragt ein Laserspot teilweise über den Rand einer der Projektionsflächen 91 hinaus, so liegt die Güte des Empfangssignals unterhalb der erwarteten Soll-Güte.

Prüfen des Prüfkriteriums 4 - Strahleigenschaften, insbesondere Divergenz des Laserstrahls

Um die Eigenschaften des Laserstrahls zu überprüfen, müssen verschiedene Parameter des Laserstrahls vermessen werden. Hierzu wird die mittlere der unteren Projektionsflächen 91.2 verwendet. Bei mehreren nacheinanderfolgenden Scans wird nur ein Laserpuls jeweils einer Pulsfolge mit den bereits beschriebenen Eigenschaften ausgelöst, nämlich der, der mittig auf die mittlere der unteren Projektionsflächen 91.2 auftrifft. Mittels der Prüfkamera 5 wird ein Bild über die Dauer einer minimalen für die Belichtung hinreichenden Anzahl von Scans aufgenommen, sodass sich die Abbildungen der Laserspots im Bild überlagern. Aus diesem Bild können dann geeignete Parameter zur Beschreibung, wie beispielsweise die Helligkeit der Laserspots, die Ist-Laserspotbreite und die Ist-Laserspothöhe oder auch gegebenenfalls die Anzahl und Intensitätsverteilung einzelner Stacks einer den Laserstrahl aussendenden Laserdiode gewonnen werden, womit der Laserstrahl hinreichend genau parametrisiert werden kann.

Prüfen des Prüfkriteriums 5 - Exaktheit der Entfernungsmessung

Für eine redundante Prüfung der Genauigkeit der Entfernungsmessung werden mehrere Messstrecken unterschiedlicher optischer Weglänge in der Prüfvorrichtung realisiert.
Eine erste Messstrecke, mit einer ersten optischen Weglänge, ergibt sich aus der doppelten Entfernung zur Messtafel 8, die im Mittel durch den Abstand zwischen Laserscanner 41 und Messtafel 8 bestimmt ist und z. B. 3 m betragen kann. Die Entfernung ändert sich über dem Scanwinkelbereich in bekannten Grenzen, die bei der Prüfung beachtet werden.
Zwei weitere optische Weglängen ergeben sich aus einer gegenüberliegenden der Anordnung eines bzw. zwei der Einzelspiegel 7 und eines bzw. zwei der Spiegelflächen 11 der Messtafel 8. Bei einer beispielsweise angenommenen Entfernung von 3 m ergeben sich damit, in der Prüfvorrichtung integriert, eine zweite Messstrecke von 6 m und eine dritte Messstrecke von 9 m. Diese Messstrecken können je nach Größe der Spiegelflächen 11 und Einzelspiegel 7 durch einen einzelnen Laserspot oder mehrere Laserspots beaufschlagt werden. Über eine Laufzeitmessung des Laserpulses wird die Länge der Messstrecken gemessen und mit der aus dem Aufbau der Prüfvorrichtung bekannten und abgespeicherten optischen Weglängen für die Messstrecken verglichen. Die Messstrecken sind so toleriert, dass mit der Messabweichung für die Entfernungsmessung des Laserscanners 41 eine verlässliche Aussage über die Qualität der Entfernungsmessung gemacht werden kann.

Prüfen des Prüfkriteriums 6 - Sendeleistung der Laserdiode des Laserscanners 41

Um die Sendeleistung der Laserdiode zu überprüfen, wird zwischen die Messtafel 8 und den Laserscanner 41 eine Dämpfungsscheibe 12 eingesetzt. Die Dämpfungsscheibe 12 dient dazu, die Impulsleistung der Laserdiode an die Verhältnisse in der Prüfvorrichtung mit der geringen Messdistanz von z. B. 3 m bis 9 m anzupassen. Sie wird dabei so dimensioniert, dass ein Laserpuls, der auf die schwarze Oberfläche der Messtafel 8 auftrifft, so reflektiert wird, dass gerade noch ein Empfangssignal detektiert werden kann, aus dem ein verlässlicher Entfernungswert gebildet werden kann. In Kenntnis der Absorption der Dämpfungsscheibe 12 kann aus der Güte der Messwerte auf die Sendeleistung der Laserdiode des Laserscanners 41 rückgeschlossen werden.

Prüfen des Prüfkriteriums 7 - Zeitgenauigkeit und Gleichlauf des Polygonspiegels

Die Messung von Zeitgenauigkeit der Ablaufsteuerung im Laserscanner 41 und der Gleichlauf des Polygonspiegels im Laserscanner 41 wird analog der Prüfung der Strahleigenschaften des Laserstrahls durchgeführt. Dazu wird über mehrere Scans jeweils ein gleicher Laserpuls der Laserfolgen aktiviert und der Auftreffort über die Dauer der Scans mit Langzeitbelichtung aufgenommen. Das entstehende Bild wird dann nach Schärfekriterien untersucht. Bei idealen Verhältnissen des Laserscanners 41 entsteht eine klare, scharf umrissene Abbildung der sich exakt überlagernden Laserspots im Bild. Sind die Abläufe mit einem Jitter versehen, so wird der Spot nicht immer auf die gleiche Stelle der Messtafel 8 abgelenkt und es entsteht ein unscharfes Bild. Das Bild kann mit entsprechenden Algorithmen (z. B. wie sie für den Autofocus verwendet werden) ausgewertet werden.

Prüfen des Prüfkriteriums 8 - Prüfen unterschiedlicher Reflexionseigenschaften

Wie in der Beschreibung der Messtafel 8 dargelegt, umfasst diese Oberflächen unterschiedliche Reflektivität, die sich zwischen Extremen bewegt, nämlich die schwarze Oberfläche der Messtafel 8, die Projektionsflächen 91 und die Reflexionsflächen 92. Mit Hilfe dieser Oberflächen unterschiedlicher Reflektivität kann der Material-/Oberflächeneinfluss auf die Entfernungsmessung beurteilt werden.

Prüfen des Prüfkriteriums 9 - Ausrichtung der Kamera 42 zum Laserscanner 41

Nach der Prüfung der Lage der Scanebene zum scannereigenen-Koordinatensystem des Laserscanners 41 muss auch die Ausrichtung der Kamera 42 zu diesem scannereigenen-Koordinatensystem ausgerichtet werden.
Der Laserscanner 41 und die Kamera 42 sind bereits werksseitig durch feste Verschraubung zueinander justiert, womit die Kamera 42 grundsätzlich zu dem scannereigenen Koordinatensystem ausgerichtet ist.
Zur Prüfung dient der umlaufende weiße Rahmen 13 auf der Messtafel 8 sowie das durch die Anordnung und Geometrie der Komponenten der Messtafel 8 definierte Muster, insbesondere das Linienmuster. Aus der Aufnahme des Rahmens 13 und dem Wissen über die tatsächliche Geometrie und Ausrichtung des Rahmens 13 kann auf die Ausrichtung der Kamera 42 gegenüber diesem Rahmen 13 geschlossen werden. Da der Laserscanner 41 bereits gegenüber der Messtafel 8 ausgerichtet ist, kann damit die Ausrichtung der Kamera 42 im Laserscanner-Koordinatensystem bestimmt werden.

Bezugszeichenliste

| | |
|---|---|
| 1 | Grundplatte |
| 2 | Justierplatte |
| 3 | Aufnahmeplatz |
| 4 | Verkehrsüberwachungsgerät / VÜG |
| 41 | Laserscanner |
| 42 | Kamera |
| 5 | Prüfkamera |
| 6 | Prüflaser |
| 7 | Einzelspiegel |
| 8 | Messtafel |
| 9 | Messfläche |
| 91 | Projektionsfläche |
| 91.1 | obere Projektionsfläche |
| 91.2 | untere Projektionsfläche |
| 92 | Reflexionsfläche |
| 92.1 | Vertikallinie |
| 92.1.1 | schmale Vertikallinie |
| 92.1.2 | breite Vertikallinie |
| 92.2 | Diagonallinie |
| 10 | Speicher |
| 11 | Spiegelfläche |
| 12 | Dämpfungsscheibe |
| 13 | Rahmen |
| 14 | Messmarke |
| 15 | Beleuchtungseinrichtung |
| 16 | Umlenkspiegel |

| | |
|---|---|
| M | Mittellinie |
| Φ | Scanwinkel |
| A | Amplitude |
| L | Längsachse des grundplatteneigenen Koordinatensystems |
| Q | Querachse des grundplatteneigenen Koordinatensystems |

(fortgesetzt)

| | |
|---|---|
| L' | Längsachse des scannereigenen Koordinatensystems |
| Q' | Querachse des scannereigenen Koordinatensystems |
| $S_L$ | Soll-Laserspotlänge |
| $S_B$ | Soll-Laserspotbreite |
| $D_L$ | Länge der Diagonallinie |
| $\alpha$ | Winkel |
| G | gedachte Gerade |

**Patentansprüche**

1. Prüfvorrichtung für ein Verkehrsüberwachungsgerät (4), mit einem Laserscanner (41), aufweisend eine Justierplatte (2), die einen Aufnahmeplatz (3) zur definierten Aufnahme eines zu prüfenden Verkehrsüberwachungsgerätes (4) vorsieht und eine zur Justierplatte (2) in einem festen Abstand angeordnete Messtafel (8) die ein Linienmuster entlang einer gedachten Geraden (G) aufweist, mit mehreren zu der Geraden (G) senkrecht verlaufenden Vertikallinien (92.1) und einer Diagonallinie (92.2), wobei die Justierplatte (2) und die Messtafel (8) zueinander so ausrichtbar sind, dass die Gerade (G) in einer Soll- Scanebene des Laserscanners (41) liegt und die Diagonallinie (92.2) die Gerade (G) auf einer senkrechten Mittellinie (M) der Messtafel (8) schneidet, wobei sie mit der Geraden (G) einen Winkel ($\alpha$) einschließt, der so gewählt ist, dass von dem Laserscanner (41) ausgesendete Laserpulse wenigstens drei Laserspots mit einer Soll- Laserspotbreite ($S_B$) und einer Soll- Laserspotlänge ($S_L$) auf die Diagonallinie (92.2) bilden.

2. Prüfvorrichtung nach Anspruch 1, **dadurch gekennzeichnet,** **dass** für den Winkel ($\alpha$) gilt: $\alpha$ = arc sin ($S_L$/2) / ($D_L$/2), wobei $S_L$ die Soll-Laserspotlänge und $D_L$ die Länge der Diagonallinie (92.2) ist, womit eine maximale Anzahl von Laserspots auf die Diagonallinie (92.2) auftreffen.

3. Prüfvorrichtung nach Anspruch 1, **dadurch gekennzeichnet,** **dass** die Vertikallinien (92.1) schmale Vertikallinien (92.1.1) mit einer Linienbreite gleich der Soll-Laserspotbreite ($S_B$) und/oder breite Vertikallinien (92.1.2) mit einer Linienbreite gleich einem Vielfachen der Soll-Laserspotbreite ($S_B$) sind und die Linienlänge der Vertikallinien (92.1) gleich der Soll-Laserspotlänge ($S_L$) ist, womit eine Abweichung der Scanebene von der Soll-Scanebene sowie eine Abweichung einer Nulllage der Scanebene von einer Soll-Nulllage bestimmt werden kann.

4. Prüfvorrichtung nach Anspruch 1, **dadurch gekennzeichnet,** **dass** zwischen der Justierplatte (2) und der Messplatte (8) eine Dämpfungsscheibe (12) vorhanden ist und die Messtafel (8) eine mattschwarze Oberfläche mit einer Reflektivität aufweist, die in Zusammenwirkung mit der Dämpfungsscheibe 12, eine noch ausreichende Reflexion der Laserpulse eines vom Laserscanner 41 kommenden Laserstrahles in den Laserscanner 41 zurück gewährleistet, so dass aus dem generierten Empfangsignal gerade noch ein Distanzwert gebildet werden kann.

5. Prüfvorrichtung nach Anspruch 1, **dadurch gekennzeichnet,** **dass** die Messtafel (8) eine rechteckige Form aufweist, wobei jeweils mittig an den vier Kanten eine Messmarke (14) vorhanden ist und zu der Prüfvorrichtung ein Prüflaser (6) gehört, welcher zur Justierplatte (2) ausgerichtet an dieser montiert ist und geeignet ist einen Prüflaserstrahl mit einem kreuzförmigen Strahlquerschnitt auszusenden, womit die Messtafel (8) und die Justierplatte (2) zueinander ausgerichtet werden können.

6. Prüfvorrichtung nach Anspruch 1, **dadurch gekennzeichnet,** **dass** die Messtafel (8) untere Projektionsflächen (91.2) in der Höhe des Linienmusters aufweist und zu der Prüfvorrichtung eine Prüfkamera (5) gehört, wobei die Prüfkamera (5) zur Justierplatte (2) ausgerichtet an dieser so montiert ist, dass die unteren Projektionsflächen (91.2) in der Objektebene der Prüfkamera (5) liegen, womit auf den unteren Prüfflächen (91.2) abgebildete Laserspots von der Prüfkamera (5) zur Bewertung aufgenommen werden kann.

7. Prüfvorrichtung nach Anspruch 1, **dadurch gekennzeichnet,** **dass** die Messtafel (8) zwei obere Projektionsflächen (91.1) oberhalb des Linienmusters aufweisen und zu der Prüfvorrichtung, zwei Umlenkspiegel (16) und eine Prüfkamera (5) gehören, wobei die Prüfkamera (5) zur Justierplatte (2) ausgerichtet an dieser so montiert ist, dass die oberen Projektionsflächen (91.1) in der Objektebene der Prüfkamera (5) liegen und die zwei Umlenkspiegel (16) so angeordnet sind, dass auftreffende Laserpulse auf jeweils eine der oberen Projektionsflächen (91.1) auftreffen.

8. Prüfvorrichtung nach Anspruch 1, **dadurch gekennzeichnet,**
   **dass** die Messtafel (8) wenigstens eine Spiegelfläche (11) aufweist und zu der Prüfvorrichtung wenigstens ein Einzelspiegel (7) gehört und die wenigstens eine Spiegelfläche (11) und der wenigstens eine Einzelspiegel (7) so zueinander und zur Justierplatte (2) angeordnet sind, dass ein Laserpuls mehrfach gefaltet auf der Messtafel (8) auftrifft, womit wenigstens eine Messstrecke realisiert wird, die einem Vielfachen des Abstandes von Justierplatte (2) und Messtafel (8) entspricht.

9. Prüfvorrichtung nach Anspruch 1, **dadurch gekennzeichnet,**
   **dass** die Messtafel (8) einen umlaufenden weißen Rahmen (13) aufweist, der zur Ausrichtung einer zu dem Gerät gegebenenfalls gehörigen Kamera (42) dient und die Prüfvorrichtung eine Beleuchtungseinrichtung (15) zur Beleuchtung der Messtafel (8) aufweist.

10. Prüfverfahren für ein Verkehrsüberwachungsgerät (4) mit einem Laserscanner (41), **dadurch gekennzeichnet,**
    **dass** ein scannereigenes Koordinatensystem eines Verkehrsüberwachungsgerätes (4) und eine Messtafel (8) mit einem Linienmuster entlang einer gedachten Geraden (G) mit mehreren zu der Geraden (G) senkrecht verlaufenden Vertikallinien (92.1) und einer Diagonallinie (92.2), welche die Gerade (G) auf einer senkrechten Mittellinie (M) der Messtafel (8) schneidet, wobei sie mit der Geraden (G) einen Winkel ($\alpha$) einschließt, der so gewählt ist, dass von dem Laserscanner (41) ausgesendete Laserpulse wenigstens drei Laserspots mit einer Soll-Laserspotbreite ($S_B$) und einer Soll-Laserspotlänge ($S_L$) auf die Diagonallinie (92.2) auftreffen, so zueinander ausgerichtet werden, dass die Gerade (G) in einer Soll-Scanebene des Laserscanners (41) liegt,
    **dass** der Laserscanner (41) über einen Scanwinkelbereich einen Laserstrahl mit einer Vielzahl von Laserpulsen aussendet, die auf die Messtafel (8) treffen und dort jeweils einen der Laserspots bilden und beim Auftreffen auf die senkrecht verlaufenden Vertikallinien (92.1) und die Diagonallinie (92.2) in einen Empfänger des Laserscanners (41) reflektiert werden und dort Empfangssignale generieren mit einer Amplitude (A),
    **dass** aus den Werten der Amplituden (A) der Empfangssignale eine Ist-Güte-Kurve der Amplitude (A) über den Scannwinkel ($\Phi$) gebildet wird, die mit einer bekannten Soll-Güte-Kurve verglichen wird, um auf die Lage der Ist-Scanebene im Vergleich zur Soll-Scanebene zu schließen.

Fig. 1

Fig. 2

M

$S_L$

$S_B$

$-\varphi$

A

$\varphi$

G

## Fig. 3a

M

$-\varphi$

A

$\varphi$

G

## Fig. 3b

M

$\Phi$

$-\varphi$

A

$\varphi$

G

## Fig. 3c

M

$D_L$

α

$S_L$

$S_B$

G

A

- φ

φ

## Fig. 4a

M

G

A

- φ

φ

## Fig. 4b

Europäisches
Patentamt

European
Patent Office

Office européen
des brevets

**EUROPÄISCHER RECHERCHENBERICHT**

Nummer der Anmeldung

EP 13 16 1217

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 1 355 128 A1 (SICK AG [DE]) 22. Oktober 2003 (2003-10-22) | 1,10 | INV. G01S7/497 |
| A | * Absätze [0064], [0065] - [0068], [0049], [0073]; Abbildungen 5,6 * ----- | 2-9 | |
| A | DE 195 41 379 A1 (FRAUNHOFER GES FORSCHUNG [DE]) 15. Mai 1997 (1997-05-15) * Spalte 2, Zeilen 34-49; Abbildungen 2-3 * ----- | 1-10 | |
| A | EP 0 363 072 A1 (GEN ELECTRIC CO PLC [GB]) 11. April 1990 (1990-04-11) * Seite 3, Zeilen 2-12; Abbildungen 2-3 * ----- | 1-10 | |
| A | JP 2000 206243 A (HITACHI LTD) 28. Juli 2000 (2000-07-28) * Abbildungen 1,4,5 * ----- | 1-10 | |

RECHERCHIERTE
SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 3. Juni 2013 | Metz, Carsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 16 1217

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-06-2013

| Im Recherchenbericht angeführtes Patentdokument | Datum der Veröffentlichung | Mitglied(er) der Patentfamilie | Datum der Veröffentlichung |
|---|---|---|---|
| EP 1355128 A1 | 22-10-2003 | AT 337540 T<br>DE 10217294 A1<br>EP 1355128 A1 | 15-09-2006<br>06-11-2003<br>22-10-2003 |
| DE 19541379 A1 | 15-05-1997 | DE 19541379 A1<br>JP H09170930 A<br>US 5805286 A | 15-05-1997<br>30-06-1997<br>08-09-1998 |
| EP 0363072 A1 | 11-04-1990 | EP 0363072 A1<br>GB 2223374 A<br>JP H02122307 A | 11-04-1990<br>04-04-1990<br>10-05-1990 |
| JP 2000206243 A | 28-07-2000 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1355128 B1